# EUROPÄISCHE PATENTANMELDUNG

(11) **EP 3 333 763 A1**
(43) Veröffentlichungstag der Anmeldung: **13.06.2018**
(21) Anmeldenummer: 17195727.7
(22) Anmeldetag: 10.10.2017
(51) Int. Cl.: G06K 9/00

(54) **VERFAHREN ZUR BODENOBERFLÄCHENSCHÄTZUNG**

(30) Priorität: 08.12.2016 DE 102016224530
(71) Anmelder: VOLKSWAGEN AKTIENGESELLSCHAFT, 38440 Wolfsburg (DE); MAN Truck & Bus AG, 80995 München (DE)
(72) Erfinder: NOURANI-VATANI, Navid, 10117 Berlin (DE); HOLLEIS, Thomas, San Jose, CA 95134 (US); MEINECKE, Marc-Michael, 38524 Sassenburg (DE)

(57) **Zusammenfassung**

Die vorliegende Erfindung betrifft ein Verfahren zur Bodenoberflächenschätzung, insbesondere für eine Befahrbarkeitsanalyse mit einem Landfahrzeug, bei dem mittels einer Sensoreinheit eine dreidimensionale Punktewolke eines Geländes erstellt wird, das aus der Bodenoberfläche und etwaigen Objekten besteht. Um eine hinreichende Abschätzung der Bodenoberfläche zu schaffen, die eine Befahrbarkeitsanalyse mit einem Landfahrzeug erlaubt, wird erfindungsgemäß vorgeschlagen, dass aus der 3D-Punktewolke eine digitale Höhenkarte erstellt wird und folgende Iterationsschritte durchgeführt werden:
a) die Höhenkarte wird mittels einer Fouriertransformation, insbesondere einer diskreten Fouriertransformation (DFFT) in den Frequenzraum transformiert,
b) in dem Frequenzraum wird ein Tiefpassfilter angewendet, um hohe Frequenzen auszufiltern,
c) die gefilterten Daten werden mittels einer inversen Fouriertransformation (inverse FFT) in den Ortsbereich zurücktransformiert,
d) im Ortsbereich wird die Differenz zwischen der digitalen Höhenkarte und den zurücktransformierten Daten gebildet und
e) sofern die Differenz einen vorgebbaren Grenzwert überschreitet, wird eine erneute Fouriertransformation gemäß Iterationsschritt a), eine Tiefpassfilterung gemäß Iterationsschritt b), eine Rücktransformation gemäß Iterationsschritt c) und eine Differenzbildung nach Iterationsschritt d) durchgeführt, bis keine Differenz den vorgegebenen Grenzwert überschreitet,
so dass die bearbeitete digitale Höhenkarte der Bodenoberfläche entspricht.

## Beschreibung

Die vorliegende Erfindung betrifft ein Verfahren zur Bodenoberflächenschätzung, insbesondere für eine Befahrbarkeitsanalyse mit einem Landfahrzeug, bei dem mittels einer Sensoreinheit eine dreidimensionale Punktewolke eines Geländes erstellt wird, das aus der Bodenoberfläche und etwaigen Objekten besteht.

In den vergangenen Jahren hat sich auf dem Gebiet des automatischen Fahrens von Landfahrzeugen ein beachtlicher Fortschritt ergeben. Damit sich die Fahrzeuge orientieren können und Gefahrenquellen erkannt werden, wurden unterschiedliche Systeme und Verfahren entwickelt, die eine hinreichend genaue Abschätzung der Umgebung ermöglichen. Bisher bekannte Verfahren sind jedoch auf die Anwendung im normalen Straßenverkehr beschränkt, weil die vorgegebene Struktur von öffentlichen Straßen die Bestimmung der Befahrbarkeit vereinfacht. Insbesondere ist hierzu auf üblicherweise vorhandene Fahrstreifen, eine im wesentlichen konstante Fahrspurbreite und andere Infrastrukturelemente hinzuweisen, die nach einer automatischen Erkennung und Ortung eine Orientierung des Fahrzeugs erlauben.

Im Offroad-Bereich, wie beispielsweise im Tagebergbau, fehlen vergleichbare Merkmale der Infrastruktur, weshalb automatische Fahrassistenten außerhalb des öffentlichen Straßennetzes nicht anwendbar sind. Insbesondere fehlen geeignete Verfahren, um die Bodenoberfläche zu erkennen oder abzuschätzen, um automatisch zu entscheiden, ob und ggf. wie ein vorausliegender Wegabschnitt mit einem Fahrzeug zu befahren ist.

Es hat bereits Versuche gegeben, Befahrbarkeitsanalysen zu etablieren, wobei insbesondere auf Bildanalyseverfahren und räumliche Analyseverfahren hinzuweisen ist, die jedoch keine zufriedenstellenden Ergebnisse geliefert haben und die zum Teil aufgrund der Größe des Geländes und mithin aufgrund der Größe der Bodenoberfläche sehr rechenaufwendig sind.

Ein anderer Ansatz wird bei der sogenannten Frequenzanalyse nach dem Verfahren von Douillard verfolgt, die eine digitale Rekonstruktion der Bodenoberfläche erlaubt, wobei das Verfahren nach Douillard einen senkrechten Blick auf die Bodenoberfläche voraussetzt (sogenannte Vogelperspektive), was bei Landfahrzeugen nicht möglich ist und weshalb das Verfahren nach Douillard lediglich zu Analyse des Meeresbodens oder vergleichbarer Bodenoberflächen unter Wasser eingesetzt wurde.

Weitere Verfahren und Vorrichtungen zur Befahrbarkeitsanalyse sind in DE 10 2012 112 104 A1, US 2010/0030473 A1 und US 9,052,721 B1 offenbart.

Hiervon ausgehend ist es die Aufgabe der vorliegenden Erfindung, ein Verfahren anzugeben, das eine hinreichende Abschätzung der Bodenoberfläche schafft, die eine Befahrbarkeitsanalyse mit einem Landfahrzeug erlaubt. Die Bodenoberfläche ist dabei als die Fläche des Geländes ohne etwaiger Objekte, wie beispielsweise große Steine, Poller oder Bäume zu verstehen, die üblicherweise mit anderen Verfahren abgebildet und erkannt werden.

Die Aufgabe wird durch das Verfahren nach Anspruch 1 gelöst, das erfindungsgemäß das folgende Iterationsverfahren umfasst.

Zunächst wird aus der 3D-Punktewolke eine digitale Höhenkarte erstellt, die mittels einer Fouriertransformation (FFT), insbesondere eine diskreten Fouriertransformation (DFFT) in den Frequenzraum transformiert wird. Im Frequenzbereich wird die digitale Höhenkarte durch eine komplexe Kombination aus Sinus- und Kosinusschwingungen repräsentiert, wobei Bereiche der Geländeoberfläche mit geringen Höhenunterschieden im Ortsbereich durch niedrige Frequenzen (im Frequenzbereich) dargestellt werden. Demgegenüber werden Objekte mit großen Höhenänderungen (im Ortsbereich) nach einem Wechsel in den Frequenzbereich durch hohe Frequenzen dargestellt.

Im Frequenzbereich wird ein Tiefpassfilter angewendet, um hohe Frequenzen auszufiltern. Das Herausfiltern von hohen Frequenzen erfolgt, weil anzunehmen ist, dass diese von der Detektion etwaiger Objekte stammt, die eben nicht mit dem Verfahren erkannt werden sollen. Anschließend werden die gefilterten Daten mittels einer inversen Fouriertransformation (inverse FFT) in den Ortsbereich zurücktransformiert, was eine erste Abschätzung der Bodenoberfläche - also des Geländes ohne etwaiger Objekte - schafft. Um zu überprüfen, ob der erhaltene Datensatz der realen Bodenoberfläche entspricht, wird im Ortsbereich die Differenz zwischen der digitalen Höhenkarte (in der noch erkannte Objekte vorhanden sind) und den zurücktransformierten Daten gebildet. Sofern die Differenz einen vorgebbaren Grenzwert überschreitet, wird eine erneute Fouriertransformation, eine erneute Tiefpassfilterung, eine erneute Rücktransformation und eine erneute Differenzbildung durchgeführt, bis keine der auftretenden Differenzen den vorgegebenen Grenzwert überschreitet, so dass die bearbeitete digitale Höhenkarte im Wesentlichen der Bodenoberfläche entspricht.

Durch das vorbeschriebene Iterationsverfahren ist es ressourcenschonend und unter Einsatz vergleichsweise geringer Rechenkapazitäten möglich, eine große Bodenoberfläche zu schätzen, um eine Befahrbarkeitsanalyse durchzuführen. Insbesondere das Entfernen hoher Frequenzen im Frequenzbereich schafft eine zunehmend genaue Annährung des digitalen Profils an die reale Bodenoberfläche, was auch eine winklige Aufnahme des Geländes mit der Sensoreinheit und mithin den Einsatz für Landfahrzeuge erlaubt, wie insbesondere LKWs und PKWs.

Bevorzugte Ausgestaltungen der vorliegenden Erfindung werden im Folgenden und in den Unteransprüchen erläutert.

Um die 3D-Punktewolke des Geländes zu erstellen, sind prinzipiell alle Sensoreinheiten geeignet, mit denen sich dreidimensionale Oberflächen abbilden lassen. Als bevorzugt haben sich allerdings ein LIDAR und/oder eine Stereokamera erwiesen, weil mittels dieser Sensoreinheiten eine hinreichende Dichte von Messpunkten erzeugt wird. Ferner werden derartige Sensoreinheiten ohnehin bereits für andere Zwecke in modernen Fahrzeugen verwendet, so dass Synergieeffekte insbesondere bei der Stromversorgung und dem Einbau der Vorrichtung in das Fahrzeug ausgenutzt werden können.

Damit das anspruchsgemäße Verfahren ressourcenschonend angewendet werden kann, wird zur Erstellung der digitalen Höhenkarte die dreidimensionale Punktewolke des Geländes zunächst in eine 2,5D-Gitterkarte mit mehreren Zellen transformiert. Im Gegensatz zu einer dreidimensionalen Punktewolke weist eine 2,5D-Gitterkarte pro Zelle beziehungsweise pro Gitterpunkt nur einen Höhenwert auf, so dass senkrechte Wände oder übereinander angeordnete Punkte, wie es in 3D-Gitterkarten regelmäßig vorkommt, in 2,5D-Gitterkarten nicht abgebildet werden können. Jeder Zelle innerhalb der 2,5D-Gitterkarte wird anschließend ein Wert zugeordnet, der insbesondere dem niedrigsten Wert der Zelle oder dem Mittelwert des niedrigsten Drittels aller Werte innerhalb der Zelle entspricht. Insbesondere die zuletzt angegebene Alternative hat sich als besonders bevorzugt herausgestellt, weil ein etwaiges Sensorrauschen hiermit weitestgehend unterdrückt werden kann.

Konkrete Ausgestaltungen der vorliegenden Erfindung werden im Folgenden anhand der Figuren erläutert. Es zeigen:
- Fig. 1: ein Fahrzeug mit einer Sensoreinheit,
- Fig. 2a-d: schematische Darstellungen der Bodenoberflächenschätzung und
- Fig. 3: ein Flussdiagramm.

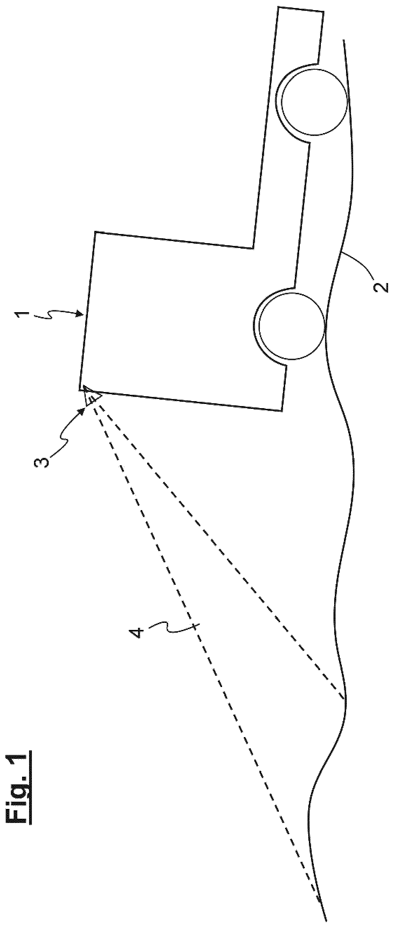

Fig. 1 zeigt eine typische Situation eines LKWs 1 im Offroad-Einsatz, der auf einer unebenen Bodenoberfläche 2 fährt. Um für einen automatischen Fahrassistenten und zur Durchführung einer Befahrbarkeitsanalyse eine Abschätzung der Bodenoberflächen durchführen zu können, weist der LKW 1 eine Sensoreinheit 3 auf, die die dreidimensionale Lage von Punkten des Geländes feststellt. Im dargestellten Ausführungsbeispiel wird die Bodenoberfläche innerhalb des Kegels 4 betrachtet, der schrägwinkelig auf die Bodenoberfläche trifft.

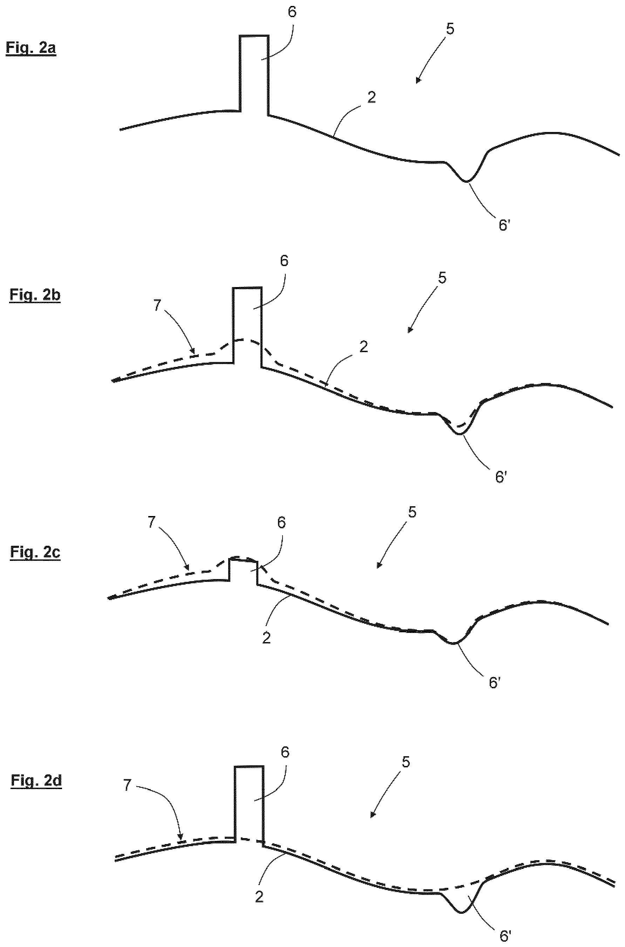

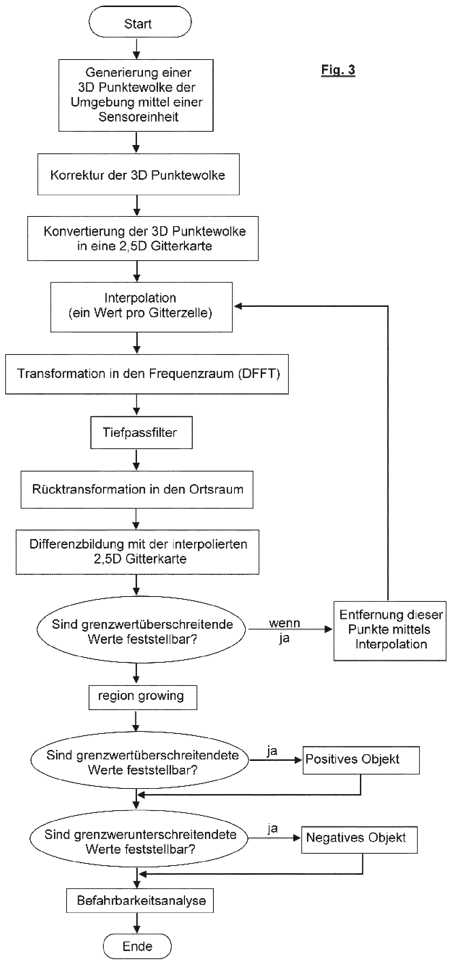

Weil die Bodenoberfläche eine große Ausdehnung hat und herkömmliche Verfahren zur Schätzung der Bodenoberfläche rechenaufwendig sind, wird das folgende Iterationsverfahren vorgeschlagen, dass anhand der Fig. 2a bis d und 3 erläutert wird.

Fig. 2a zeigt einen typischen Geländeabschnitt 5, der aus der Bodenoberfläche 2 und zwei Objekten 6, 6' besteht, die im dargestellten Ausführungsbeispiel ein Poller und ein Schlagloch sind. Von diesem Geländeabschnitt 5 wird mittels der Sensoreinheit 3 eine dreidimensionale Punktewolke erstellt, die mithin Punkte von Objekten und Punkte von der Bodenoberfläche aufweist. Die gewonnenen Daten sind aufgrund der vorherigen Eigenbewegung des LKW 1 erforderlichenfalls zu korrigieren, wozu Daten herangezogen werden können, die beispielsweise aus einem Beschleunigungssensor stammen. Anschließend wird die 3D-Punktewolke in eine 2,5D-Gitterkarte mit einer definierten Anzahl von Gitterzellen transformiert, wobei jede Gitterzelle eine Vielzahl von Messwerten der 3D-Punktewolke enthält. Aus der Vielzahl von Punkten wird ein Wert interpoliert, was beispielsweise dadurch geschehen kann, dass die Werte des niedrigsten Drittels gemittelt werden, was ein Sensorrauschen weitestgehend unterdrückt. Alternativ kann auch der niedrigste Wert oder eine andere Interpolation vorgenommen werden.

Bei besonderen topografischen Gegebenheiten sind nach der Transformation der 3D-Punktewolke in die 2,5D-Gitterkarte leere Gitterzellen vorhanden, denen kein Messwert zugeordnet wurde. Beispielsweise erkennt die gewählte Sensoreinheit keine Bereiche hinter einer Mauer oder einem Poller, wie er in Fig. 2a dargestellt ist. In solchen Fällen werden den leeren Gitterzellen interpolierte Werte zugeordnet, damit die diskrete Fouriertransformation durchgeführt werden kann.

Als bevorzugt hat sich eine Interpolation erwiesen, bei der der leeren Zelle der Höhenwert des nächsten Nachbarn zugeordnet wurde. Alternativ lässt sich auch eine lineare oder kubische Interpolation einsetzen.

Die Daten der interpolierten 2,5D-Gitterkarte liegen nun in einer Form vor, die mittels einer diskreten Fouriertransformation (diskrete FFT) in den Frequenzraum überführt werden kann, wo geringe Höhenunterschiede als kleine Frequenzen und große Höhenunterschiede als große Frequenzen erkennbar sind. Weil Objekte durch die vorliegende Bodenoberflächenabschätzung ausgeblendet werden sollen und weil Objekte aufgrund großer Höhenunterschiede hohe Frequenzen im Frequenzraum erzeugen, können Objekte im Frequenzraum durch einen Tiefpassfilter aus den Daten herausgefiltert werden. Anschließend ergibt eine Rücktransformation in den Ortsbereich eine erste Abschätzung der Bodenoberfläche. Genauer gesagt hängen die ermittelten Frequenzen nicht von dem Betrag einer Höhendifferenz ab sondern davon, wie schnell sich die Höhe ändert. Insofern werden Höhengradienten betrachtet und Bereiche mit einem hohen Gradienten führen zu hohen Frequenzen, die mittels eines Tiefpassfilters herausgefiltert werden können. Bereiche mit einem vergleichsweise kleinen Höhengradienten führen demgegenüber zu kleinen Frequenzen, die von der Tiefpassfilterung nicht betroffen sind. In Fig. 2b ist die erste Näherung strichliniert dargestellt (Pfeil 7). Es ist deutlich erkennbar, dass die Objekte 6, 6' auch in der unmittelbaren Nachbarschaft die Messwerte leicht verfälschen und diese geringfügig hoch oder herunter ziehen.

Um zu erkennen, ob zwischen der realen Bodenoberfläche und der in erster Näherung geschätzten Bodenoberfläche gravierende Unterschiede bestehen, wird die Differenz zwischen der interpolierten 2,5D-Gitterkarte und dem zurücktransformierten Datensatz gebildet. Wenn grenzwertüberschreitende Werte feststellbar sind, wird der betroffene Punkt mittels Interpolation entfernt (Fig. 2c). Der entfernte Punkt wird nach einer Interpolation durch benachbarte Werte ersetzt und die Daten werden erneut in den Frequenzraum transformiert. Die Iterationsschleife wird abgebrochen, wenn keine grenzwertüberschreitenden Differenzen mehr festgestellt werden oder wenn innerhalb zweier Iterationen nur geringfügige Veränderungen der geschätzten Bodenoberfläche feststellbar sind. Die Wahl, wann eine Veränderung geringfügig oder relevant ist, kann durch Festlegung geeigneter Grenzwerte festgelegt werden. Im Ortsbereich liegt dann eine Abschätzung der Bodenoberfläche ohne Objekte 6, 6' vor, wie es strichliniert in Fig. 2d gezeigt ist (Pfeil 7).

Nach dem Abschluss des Iterationsverfahrens können die ermittelten Daten zur Verbesserung der Klassifikationsrate nochmals mittels des sogenannten "Region-Growing"-Verfahrens korrigiert werden. Der Grund für die weitere Korrektur liegt darin, dass durch Objekte die Höhe der umliegenden abgeschätzten Bodenoberfläche nach oben bzw. nach unten gezogen wird, was deutlich in Fig. 2c erkennbar ist. Um solche Fehler zu korrigieren, wird ein geeigneter Wachstumsgrenzwert festgelegt und es wird ausgehend von einem Punkt P überprüft, ob alle benachbarten Punkte innerhalb des Wachstumsgrenzwertes liegen. In diesem Fall werden die Punkte als Boden klassifiziert. Anderenfalls werden die Punkte als negatives oder positives Objekt klassifiziert.

Anhand der abschließend korrigierten Daten lässt sich unter Berücksichtigung der abgeschätzten Bodenoberfläche und der Kenntnis über etwaige Objekte eine Befahrbarkeitsanalyse des vorausliegenden Geländes durchführen.

### Bezugszeichenliste

- 1: LKW
- 2: Bodenoberfläche
- 3: Sensoreinheit
- 4: Kegel
- 5: Gelände
- 6, 6': Objekte
- 7: Pfeil

## Patentansprüche

1. Verfahren zur Bodenoberflächenschätzung, insbesondere für eine Befahrbarkeitsanalyse mit einem Landfahrzeug, bei dem mittels einer Sensoreinheit (3) eine dreidimensionale Punktewolke eines Geländes (5) erstellt wird, das aus der Bodenoberfläche (2) und etwaigen Objekten (6, 6') besteht,
**dadurch gekennzeichnet, dass**
aus der 3D-Punktewolke eine digitale Höhenkarte erstellt wird und folgende Iterationsschritte durchgeführt werden:
a) die Höhenkarte wird mittels einer Fouriertransformation, insbesondere einer diskreten Fouriertransformation (DFFT) in den Frequenzraum transformiert,
b) in dem Frequenzraum wird ein Tiefpassfilter angewendet, um hohe Frequenzen auszufiltern,
c) die gefilterten Daten werden mittels einer inversen Fouriertransformation (inverse FFT) in den Ortsbereich zurücktransformiert,
d) im Ortsbereich wird die Differenz zwischen der digitalen Höhenkarte und den zurücktransformierten Daten gebildet und
e) sofern die Differenz einen vorgebbaren Grenzwert überschreitet, wird eine erneute Fouriertransformation gemäß Iterationsschritt a), eine Tiefpassfilterung gemäß Iterationsschritt b), eine Rücktransformation gemäß Iterationsschritt c) und eine Differenzbildung nach Iterationsschritt d) durchgeführt, bis keine Differenz den vorgegebenen Grenzwert überschreitet,
so dass die bearbeitete digitale Höhenkarte der Bodenoberfläche (2) entspricht.

2. Verfahren nach Anspruch 1, **dadurch gekennzeichnet, dass** die Sensoreinheit (3) einen einen LIDAR und/oder eine Stereokamera aufweist.

3. Verfahren nach einem der Ansprüche 1 oder 2, **dadurch gekennzeichnet, dass** die Sensordaten unter Zuhilfenahme der Eigenbewegung zu der 3D-Punktewolke akkumuliert werden.

4. Verfahren nach einem der Ansprüche 1 bis 3, **dadurch gekennzeichnet, dass** die zur Erstellung der digitalen Höhenkarte die dreidimensionale Punktewolke des Geländes (5) in eine 2,5D-Gitterkarte mit mehreren Zellen transformiert wird.

5. Verfahren nach Anspruch 4, **dadurch gekennzeichnet, dass** jeder der Zelle der 2,5-D-Gitterkarte ein Wert zugeordnet wird, der insbesondere dem niedrigsten Wert der Zelle oder dem Mittelwert des niedrigsten Drittels aller Werte innerhalb der Zelle entspricht.
